# FASCICULE DE BREVET EUROPEEN

(11) **EP 3 230 633 B1**
(45) Date de publication et mention de la délivrance du brevet: **06.02.2019**
(21) Numéro de dépôt: 15807892.3
(22) Date de dépôt: 09.12.2015
(51) Int. Cl.: F16K 31/04, F16K 31/50, H02K 5/128, H02K 7/08, H02K 7/06, H02K 5/167, H02K 7/14, H02K 5/04

(54) **VANNE DE DOSAGE ADAPTÉE AUX HAUTES PRESSIONS**
HOCHDRUCKDOSIERVENTIL
METERING VALVE FOR HIGH PRESSURES

(30) Priorité: 09.12.2014 FR 1462138
(43) Date de publication de la demande: 18.10.2017
(73) Titulaire: MMT SA, 6304 Zug (CH)
(72) Inventeur: THIERRY, Benjamin, 25120 Maiche (FR); FOUCAUT, Antoine, 70190 Montarlot les Rioz (FR); KLEIN, Alban, 4600 Olten (CH); HABEGGER, Christophe, 2732 Reconvilier (CH); FOURNIER, Stéphane, 25310 Abbevillers (FR)
(74) Mandataire: IP Trust
(86) Numéro de dépôt international: PCT/EP2015/079101
(87) Numéro de publication internationale: WO 2016/091941

(56) Documents cités:
- DE-A1-102005 023 794
- US-A- 4 381 747
- US-A- 4 895 301
- US-A1- 2006 071 190

## Description

### DOMAINE TECHNIQUE DE L'INVENTION

La présente invention a trait au domaine des vannes de dosage de fluides, et plus particulièrement, au domaine des vannes pilotées électriquement et travaillant sous de hautes pressions, typiquement supérieures à cent bars. L'invention porte précisément sur la construction de l'actionneur électrique et son couplage avec le corps de vanne, afin d'assurer une étanchéité totale et une compacité maximale de l'ensemble obtenu. La solution proposée permet également de réduire la masse et le coût en assurant la fiabilité de la vanne en comparaison des solutions existantes.

### ETAT DE LA TECHNIQUE ANTERIEURE

Le brevet européen EP1777447 décrit un exemple de vanne de dosage de fluide comportant un actionneur électrique de pilotage, comportant une cloche en matériau amagnétique séparant le rotor du stator afin d'assurer une étanchéité totale du fluide compris en son sein. Ce type de solution est satisfaisant lorsque les pressions de fluide à supporter par la cloche sont faibles ou moyennement élevées (jusqu'à 50 bars). Mais lorsque cette pression atteint plusieurs centaines de bars, l'épaisseur de la cloche de séparation doit être augmentée de façon à supporter les contraintes appliquées par le fluide sur cette cloche. Cette augmentation de l'épaisseur de la cloche induit une augmentation de la distance entre l'aimant rotorique et l'intérieur du stator, c'est-à-dire l'entrefer du circuit magnétique, ce qui génère une importante perte de couple sur le rotor et donc de force disponible pour mouvoir le pointeau de régulation de débit de fluide. Pour compenser cette baisse de performances il devient nécessaire, dans le cas de très hautes pressions, d'augmenter la taille du moteur et donc de la vanne de régulation, ce qui génère une augmentation de masse et de coût du système.

On connaît également le brevet européen EP2725267 décrivant un autre exemple de vanne motorisée pour réguler des fluides sous très hautes pressions, constituées d'actionneurs électriques linéaires immergés dans le fluide, et présentant une étanchéité autour de l'actionneur sous forme d'une cloche métallique externe au moteur électrique comportant un joint en verre coulé, autour de broches de connexion rigides et permettant de piloter les bobines du moteur depuis l'extérieur de cette cloche. Cette solution permet de conserver une taille de moteur réduite puisque l'entrefer magnétique du moteur n'est pas pénalisé par l'insertion d'une cloche de séparation épaisse, mais présente deux inconvénients majeurs :
- D'une part, le coût du connecteur étanche, réalisé au moyen de verre coulé, lequel est assez important.
- D'autre part, le système est très peu adapté à l'intégration d'un dispositif électronique de pilotage du moteur au sein même de la vanne, et donc immergé dans le fluide. En effet, les systèmes de dosage pour application automobile doivent souvent intégrer une intelligence électronique leur permettant de lire une commande provenant d'un BUS de communication : par exemple avec le protocole LIN communément utilisé dans le domaine automobile.

En effet, pour insérer la carte électronique du dispositif de pilotage, il faut que celle-ci puisse travailler immergée dans le fluide, mais il faut aussi prévoir une connexion entre le moteur et la carte de pilotage ainsi qu'une seconde connexion entre la carte de pilotage et le connecteur étanche coulé en verre, avant d'avoir une connexion externe de la vanne vers le système de pilotage externe. Cela présente donc un risque de détérioration des composants électroniques qui subissent la pression du fluide, mais présente aussi un inconvénient de coût du fait de la complexité de la connectique à réaliser.

On connaît également le brevet européen EP383353 décrivant une soupape à commande motorisée, dans laquelle un stator comprenant une pluralité de bobines statoriques est disposée à l'extérieur d'un élément tubulaire amagnétique. Un rotor est supporté, avec possibilité de rotation, par des paliers à l'intérieur de l'élément tubulaire en vis-à-vis du stator, tandis que ledit rotor comprend un bossage. Une partie annulaire extérieure et un rebord relient ledit bossage et ladite partie annulaire. Un mécanisme comprenant des moyens de blocage de rotation est prévu pour convertir le mouvement de rotation du rotor en un déplacement linéaire rapprochant ou écartant un élément de soupape, prévu à une extrémité d'une tige d'actionnement de la soupape, d'un siège de soupape. Le stator comprend une pluralité de pôles magnétiques autour desquels sont enroulés concentriquement des bobines statoriques. Une pluralité d'aimants permanents sont fixés à une surface courbe de chaque pôle magnétique et sont alternativement aimantés pour former un nombre de couples de pôles disposés le long de ladite surface à un pas constant.

Cette solution de l'art antérieur n'est pas compatible avec l'intégration d'un circuit électronique, notamment supportant un capteur électromagnétique, car il serait soumis au fluide et à une pression incompatible avec de tels circuits.

Les brevets EP1601084, US2006071190, US 4381747 ou DE102005023794 concernent d'autres exemples de réalisation présentant les mêmes inconvénients.

### EXPOSE DE L'INVENTION

La présente invention vise à pallier les inconvénients de l'état de la technique en proposant un ensemble mécatronique de régulation de fluide conforme à la revendication 1.

La cloche sera préférentiellement métallique mais il est possible d'envisager l'utilisation d'une matière résistante plastique type thermoplastique ou duro-plastique.

Cette configuration nouvelle basée sur l'association de deux pièces en forme de cloche, l'une pour enfermer le fluide compris dans la chambre du rotor, l'autre, plus épaisse, pour encaisser les efforts axiaux importants dus à la haute pression, permet de conserver un entrefer magnétique faible au niveau du moteur d'entrainement pour en optimiser les performances, tout en autorisant des pressions de travail très élevées, typiquement de plusieurs centaines de bars, qui génèrent des contraintes sur la cloche interne.

Les contraintes radiales exercées par le fluide sur la partie cylindrique de la cloche interne sont reprises en partie par les tôles ferromagnétiques du stator, ce qui permet de réduire au maximum l'épaisseur de la cloche interne dans cette zone.

De même, les contraintes axiales dont la résultante s'applique sur le périmètre du fond de la cloche interne, créent un effort typique de plusieurs tonnes, qui est difficilement supportable par la cloche interne seule du fait de sa faible épaisseur. L'appui de la cloche externe venant la soutenir permet de supporter cette charge sans pénaliser l'entrefer magnétique du moteur.

Ce moteur peut comprendre soit un stator composé de tôles embouties constituant des dents qui forment un diamètre intérieur en contact direct avec la cloche intérieure, soit un stator composé d'un ensemble de tôles parallèles empilées parallèlement à l'axe du moteur et formant des dents dont le diamètre intérieur est en contact direct avec la cloche intérieure.

L'ensemble présentera avantageusement un aimant solidaire de l'axe central intégré sur une carte électronique portant un élément magnéto sensible apte à détecter la position absolue de l'axe central par le déplacement de l'aimant. Cet aimant présente, par exemple, un motif d'aimantation axisymétrique autour de l'axe et l'élément magnéto sensible est généralement positionné dans l'axe de déplacement du pointeau mobile, en face de l'aimant.

Dans un mode de réalisation particulier, la cloche externe possède une ouverture permettant de placer, au plus près de la cloche interne, l'élément magnéto sensible apte à détecter le champ magnétique émis par l'aimant.

Avantageusement, la carte électronique comporte un dispositif de commande du moteur polyphasé.

Le dispositif de transformation de mouvement possède avantageusement au moins un écrou lié au rotor du moteur et au moins une portion filetée liée à l'axe central.

Dans un mode de réalisation particulier, le dispositif de transformation de mouvement possède un écrou lié au rotor et un second écrou lié à la cloche interne, chacun des écrous collaborant avec deux portions de l'axe central et possédant des filetages de sens opposés.

Cette dernière solution permet d'atteindre un facteur de réduction de mouvement important tout en conservant un bon rendement.

Les performances de cette dernière transformation de mouvement constituent également un moyen d'optimiser la taille du moteur d'entrainement afin de réduire au maximum, la taille, la masse et le coût de la solution de vanne de régulation selon l'invention.

### BREVE DESCRIPTION DES FIGURES

D'autres caractéristiques et avantages de l'invention ressortiront à la lecture qui suit d'exemples de réalisation détaillés, en référence aux figures annexées qui représentent respectivement :
- la figure 1, une vue en coupe décrivant un premier mode de réalisation de la vanne de dosage selon l'invention,
- la figure 2, une vue en coupe décrivant un second mode de réalisation intégrant un dispositif de commande du moteur ainsi qu'un capteur de position du pointeau,
- la figure 3, une vue en coupe de la vanne selon un troisième mode de réalisation avec un moteur d'entrainement de structure magnétique différente,

- la figure 4, une solution similaire à la solution de la figure 3 avec une solution alternative pour le capteur de position,
- la figure 5, en vue de coupe longitudinale, une solution intégrant un capteur de position utilisant une source de champ magnétique sous la forme de deux portions d'aimant distinctes générant une aimantation conjuguée. Une première portion, fixée sur l'axe central et donc mobile, et une seconde portion fixée autour de l'élément magnéto sensible.
- la figure 6, un quatrième mode de réalisation compact.

### DESCRIPTION DETAILLEE D'UN MODE DE REALISATION

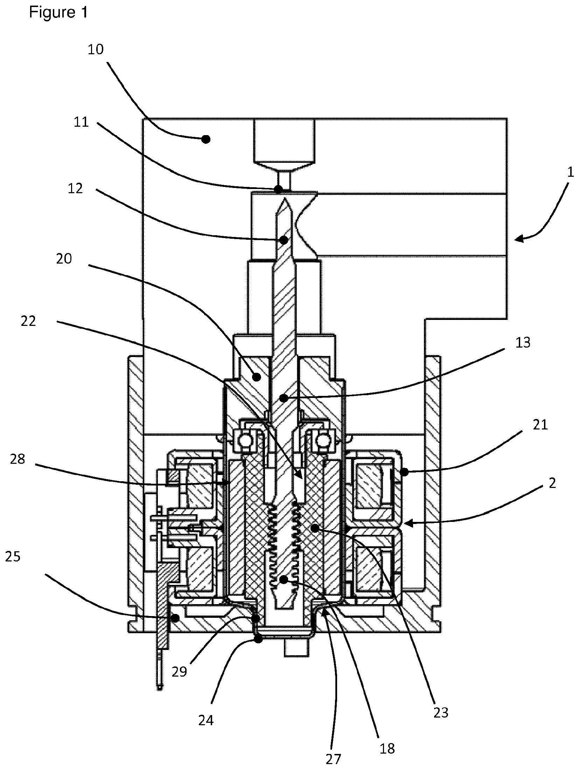

La figure 1 décrit une vanne de régulation composée d'un corps de vanne (10) possédant un siège (11) et d'un pointeau mobile (12), animé, au moyen d'un axe central (13), par un moteur polyphasé (2) comportant un stator à tôles embouties (21) entrainant en rotation un rotor aimanté multipolaire (22), lequel porte un écrou (23) interne collaborant avec une portion filetée (18) de l'axe central (13). La rotation de l'écrou entraine en translation l'axe central (13) qui est en liaison glissière avec une pièce d'anti rotation (20) fixe, et ce mouvement linéaire permet de réguler la position du pointeau (12) et donc le débit de fluide à réguler dans le conduit (1).

Le rotor (22) est enfermé dans une chambre étanche composée d'une cloche interne (24), fixe par rapport au rotor (22) et de fine épaisseur qui assure une étanchéité totale de la vanne de dosage, tout en conservant une efficacité magnétique intéressante, due au faible entrefer de la structure du moteur permise par la faible épaisseur de la cloche interne (24) située entre le rotor (22) et l'ensemble statorique (21).

Cette cloche interne (24) présente une forme générale tubulaire. La partie avant présente une section intérieure identique à la section extérieure de l'anti rotation (20). Elle est liée mécaniquement, de manière étanche, au corps de vanne (10), lequel présente un alésage de forme cylindrique.

La partie arrière de la cloche interne (24) est refermée par une extrémité tronconique, avec un segment sensiblement transversal prolongé par un segment arrière tubulaire, de section réduite, refermé par une paroi transversale discale.

Une seconde cloche, préférentiellement métallique, dite « externe » (25), qui enveloppe l'ensemble statorique (21), est fixée de façon rigide sur le corps de vanne (10) d'un côté et vient épouser la forme arrière de la cloche interne (24) de l'autre côté sur une extrémité (29).

La cloche externe (25) est fermée par un fond discal présentant un prolongement annulaire dont la surface transversale est complémentaire dudit segment transversal de la cloche intérieure (24).

De cette façon, l'effort appliqué par le fluide sous très haute pression à l'intérieur de la cloche interne (24), dont l'épaisseur est réduite au maximum, est repris d'une part radialement par les dents internes du stator (21) au niveau d'une surface de contact (28), et d'autre part surtout axialement et radialement par la partie inférieure de la cloche externe (25) au stator, au niveau d'une surface de contact (27). La cloche externe (25) est d'une part assemblée de façon à annuler le jeu axial et donc à assurer un contact des deux cloches au niveau d'une surface de contact (27) et d'autre part fixée de façon rigide sur le corps de vanne (10).

La partie arrière de la cloche interne (24) présente des formes arrondies au niveau des pliages de raccordement des parties cylindriques et des parties discales, de façon à optimiser son épaisseur vis-à-vis des concentrations de contraintes. Ces mêmes congés arrondis sont reproduits sur la partie arrière de fermeture de la cloche externe (25), dont l'épaisseur de paroi présente des variations de façon à optimiser le dimensionnement de cette pièce pour en réduire la masse et le cout.

Selon le cas, la partie de fermeture discale commune aux deux cloches peut être plane ou selon un cône, de façon à optimiser les dimensions de ces pièces pour intégrer une fonction de détection de position.

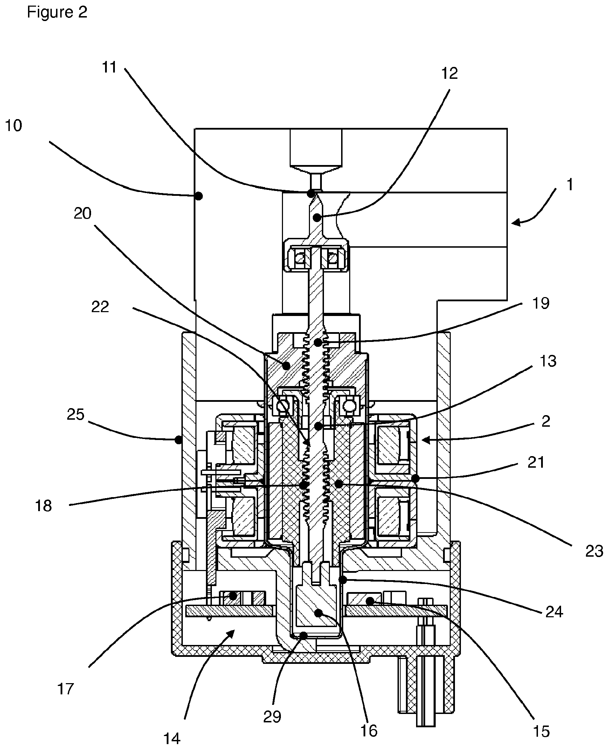

La figure 2 est une vue en coupe d'une construction de vanne de régulation selon un second mode de réalisation de l'invention, dans laquelle la structure du moteur d'entrainement (2) possède toujours deux cloches, la première, interne (24), pour enfermer le fluide contenu dans la chambre rotorique et assurer une étanchéité totale, la seconde, externe (25), pour renforcer la tenue à la pression appliquée axialement. Cette construction se distingue de la solution précédente par l'ajout d'une carte électronique (14) comportant un élément magnéto sensible (15), apte à lire la position d'un aimant (16), par exemple aimanté dans le sens axial, positionné sur l'axe central (13). De cette façon il est possible de donner une information de position absolue du pointeau (12) et donc du débit de la vanne de régulation.

La carte électronique (14) possède également un dispositif de commande (17) du moteur polyphasé (2), apte à positionner le pointeau (12) en une position de consigne donnée par l'unité de gestion des périphériques du véhicule, communiquée sous la forme d'un signal analogique ou d'un message codé et envoyé sur un BUS de communication.

La cloche interne (24) possède une extrémité (29) axiale inférieure pour loger l'aimant (16), cette même forme étant reproduite au niveau de la cloche externe (25) afin d'assurer le contact nécessaire à la reprise d'effort. Cette reprise permet de résister à une très haute pression tout en conservant une épaisseur réduite pour la cloche interne (24) entre rotor (22) et ensemble statorique (21) du moteur (2).

Dans ce mode de réalisation, le rotor (22) comporte un écrou (23) qui collabore avec une première partie filetée (18) de l'axe central, et une seconde partie filetée (19) de l'axe central (13), dont la direction d'hélice est opposée, qui collabore avec un second écrou fixe (20), lié à la cloche interne (24). La rotation de l'écrou (23) provoque un mouvement hélicoïdal de l'axe central (13), dont la composante de translation permet d'effectuer la régulation de débit. Cette solution de transformation de mouvement à deux écrous permet une multiplication de la force de poussée ainsi qu'une meilleure résolution axiale.

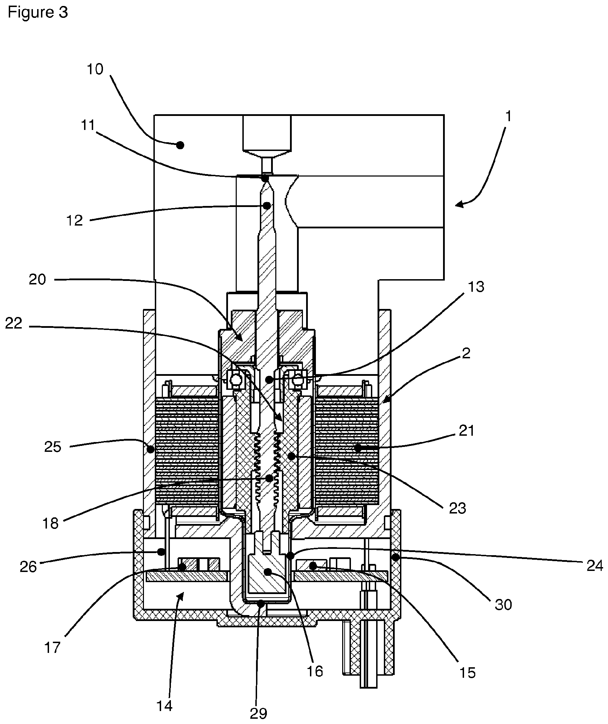

La figure 3 est une vue en coupe d'une construction de vanne de régulation selon un troisième mode de réalisation de l'invention. Cette construction se distingue de la solution de la figure précédente par le type de moteur d'entrainement (2) utilisé. L'ensemble statorique (21), de forme plate, est composé de tôles découpées et agrafées, les dents (non montrées) définissant la structure magnétique sont obtenues par découpage et présentent donc un diamètre intérieur précis qui peut s'ajuster sur le diamètre extérieur de la cloche interne (24) pour reprendre au moins en partie les contraintes radiales dues à la haute pression. Les bobinages sont distribués autour du rotor (22) et les cosses de connexion (26) permettent de venir connecter une carte électronique (14) par l'arrière du stator à l'intérieur d'un boitier isolant électrique (30). Cette construction permet d'éviter les cosses radiales et la connectique nécessaire pour les modes de réalisation selon les figures 1 et 2, et facilite l'isolation électrique par rapport au boitier métallique externe de la vanne. En effet, les cosses (26) se trouvent plus éloignées des parties métalliques externes, ce qui permet une construction coaxiale plus compacte, donc moins encombrante et plus légère.

La cloche interne (24) et la cloche externe (25) travaillent toujours en combinaison pour reprendre les contraintes de pression du fluide.

Une carte électronique (14) comporte des moyens de détection de position (15) de l'axe central (13) qui porte un aimant (16), ainsi qu'un dispositif de pilotage (17) du moteur pour assurer le control de position du pointeau (12) en fonction d'une consigne donnée par le calculateur du véhicule.

La rotation du rotor (22) entraine l'écrou (23) qui collabore avec la partie filetée (18) et la liaison entre la partie avant de l'axe (13) et la glissière (20) liée à la cloche interne (24) permet d'entrainer le pointeau (12) en translation.

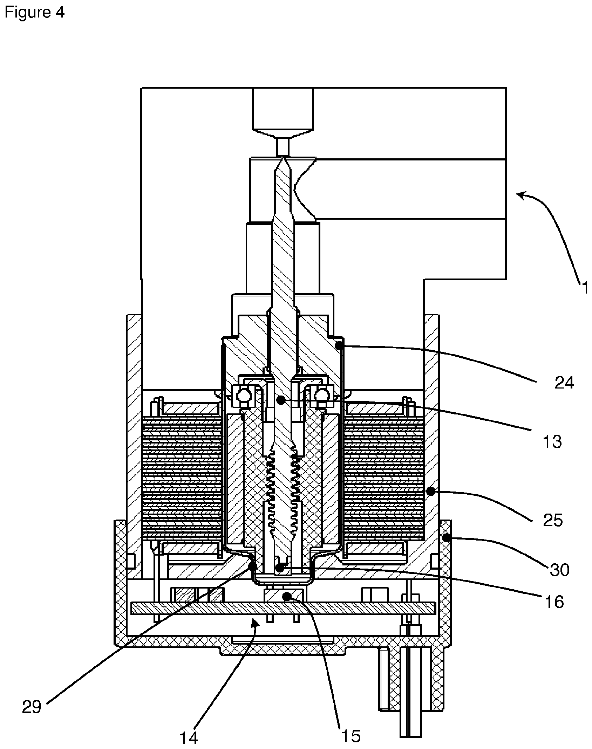

La figure 4 est une vue en coupe d'une construction très similaire à la construction de la figure 3, mais dans laquelle les moyens de détection de position sont différents de ceux utilisés sur la solution des figures 2 ou 3, dans le but d'éviter un perçage de la carte électronique (14). Dans ce mode de réalisation, la forme et le mode d'aimantation de l'aimant, par exemple selon la diamètre, permettent de placer l'élément magnéto sensible (15) en bout de l'aimant (16) porté par l'axe central (13) et non autour de ce dernier. Cela permet une meilleure utilisation de la surface de la carte électronique (14) du dispositif de pilotage (17) pour y placer les composants, et réduire le diamètre extérieur de la cloche externe et donc réduire les dimensions générales de la vanne de régulation. L'extrémité (29) inférieure de cloche interne (24) bénéficie de l'appui de la cloche externe (25) qui revient se fixer de façon rigide, par exemple par soudage, sur le corps de vanne (10).

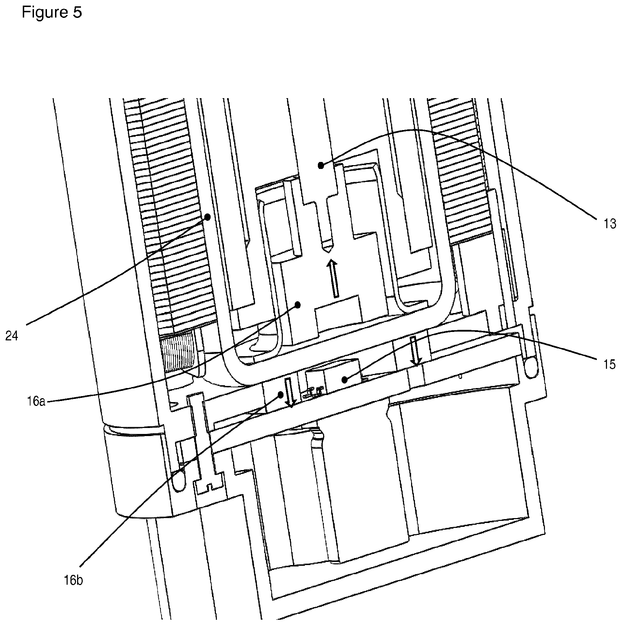

En figure 5, l'aimant (16) capteur est composé de deux parties distinctes (16a) et (16b) aimantées axialement en sens opposés, respectivement solidaires de l'axe central (13) et de l'élément magnéto sensible (15). La première partie d'aimant (16a) est solidaire de l'axe central (13) et se déplace, à l'intérieur de la cloche interne (24), axialement par rapport à l'élément magnétosensible (15) extérieur à la cloche interne (24).

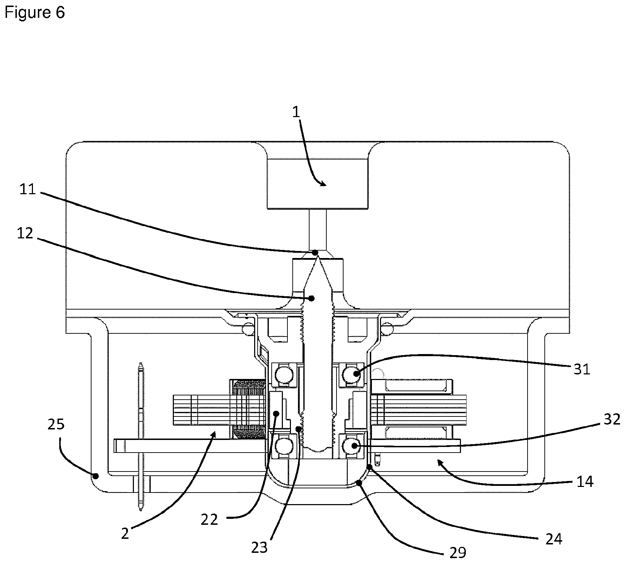

En figure 6 est présenté un quatrième mode de réalisation particulièrement compact où l'on retrouve le siège (11) du corps de vanne sur lequel vient s'appuyer un pointeau (12), mû par un moteur électrique (2) de type triphasé comme décrit par exemple dans le brevet FR2754953. Le rotor (22) de ce moteur (2) entraine un écrou (23) de la même manière que le mode de réalisation décrit en figure 2.

On retrouve une cloche interne (24) entourant et englobant le rotor (22) et présentant une extrémité (29) en contact avec une enveloppe formant une cloche externe (25).

Cette réalisation compacte est rendue possible par l'utilisation d'un moteur particulièrement plat connecté électriquement et mécaniquement à un circuit imprimé (14) mais aussi par le guidage du rotor (22) par l'aide de deux roulements (31) et (32) de part et d'autre du rotor (2).

La partie aimantée (16b) est fixe par rapport à l'élément magnétosensible (15) et sous la forme d'un aimant tubulaire ou en forme de bague, l'élément magnétosensible (15) étant placé dans l'axe et au centre de la partie aimantée (16b). Cet agencement permet astucieusement de s'affranchir de défaut de positionnement de l'élément magnétosensible par rapport aux parties aimantées (16a et 16b). En effet, le décalage d'induction détectée par l'élément magnétosensible (15) lors de son décalage par rapport à la première partie aimantée (16a) et compensé par la décalage d'induction détectée par l'élément magnétosensible (15) lors de son décalage par rapport à la deuxième partie aimantée (16b). La solution est ainsi insensible au défaut de positionnement.

## Revendications

1. Ensemble mécatronique de régulation de fluide comprenant un corps de vanne (10), un siège (11) sur lequel un pointeau mobile (12) vient s'appuyer pour fermer le conduit (1) de fluide à réguler, un moteur polyphasé (2) comportant un stator (21) et un rotor (22), un axe central (13) mobile en translation et commandant le déplacement du pointeau (12), un dispositif de transformation de la rotation du rotor (22) en translation de l'axe central (13), une cloche d'étanchéité (24) interne, solidaire du stator (21) et enveloppant le rotor (22) sur sa périphérie et isolant le rotor (22) du stator (21), une cloche externe (25) enveloppant le stator (21), **caractérisé en ce que** la cloche externe (25) au stator s'appuie au moins partiellement sur une extrémité (29) de la cloche d'étanchéité interne (24) de façon à annuler le jeu axial afin que la cloche externe (25) reprenne au moins en partie axialement et radialement les efforts de pression intérieure appliqués sur ladite cloche interne (24), au niveau d'une surface de contact (27) entre les cloches externe et interne, **en ce que** qu'il comporte un aimant (16) solidaire de l'axe central (13) et **en ce qu'**il intègre une carte électronique (14) portant un élément magnéto-sensible (15) apte à détecter la position absolue de l'axe central (13) par le déplacement de l'aimant (16).

2. Ensemble mécatronique de régulation de fluide selon la revendication 1 **caractérisé en ce que** la cloche externe (25) est réalisée en un matériau métallique ou un matériau plastique.

3. Ensemble mécatronique de régulation de fluide selon la revendication 1, **caractérisé en ce que** le stator (21) du moteur polyphasé est composé de tôles embouties constituant des dents qui forment un diamètre intérieur en contact direct avec la cloche intérieure (24).

4. Ensemble mécatronique de régulation de fluide selon la revendication 1, **caractérisé en ce que** le stator (21) du moteur polyphasé est composé d'un ensemble de tôles parallèles empilées parallèlement à l'axe du moteur (13) et formant des dents dont le diamètre intérieur est en contact direct avec la cloche intérieure (24).

5. Ensemble mécatronique selon la revendication 1, **caractérisé en ce que** l'aimant (16) présente un motif d'aimantation axisymétrique autour de l'axe (13).

6. Ensemble mécatronique selon la revendication 1, **caractérisé en ce que** l'élément magnéto sensible (15) est positionné dans l'axe de déplacement du pointeau mobile, en face de l'aimant (16).

7. Ensemble mécatronique de régulation de fluide selon l'une des revendications 6 ou 7, **caractérisé en ce que** la cloche externe (25) possède une ouverture permettant de placer, au plus près de la cloche interne (24), l'élément magnéto sensible (15) apte à détecter le champ magnétique émis par l'aimant (16).

8. Ensemble mécatronique de régulation de fluide selon l'une quelconque des revendications précédentes, **caractérisé en ce qu'**il intègre une carte électronique (14) comportant un dispositif de commande (17) du moteur polyphasé (2).

9. Ensemble mécatronique selon l'une des revendications 1 à 9 **caractérisé en ce que** le dispositif de transformation de mouvement possède au moins un écrou (23) lié au rotor (22) du moteur et au moins une portion filetée (18) liée à l'axe central (13).

10. Ensemble mécatronique selon la revendication 10 **caractérisé en ce que** le dispositif de transformation de mouvement possède un écrou (23) lié au rotor (22) et un second écrou (20) lié à la cloche interne (24), chacun des écrous collaborant avec deux portions (18) et (19) de l'axe central (13) et possédant des filetages de sens opposés.

11. Ensemble mécatronique de régulation de fluide selon l'une quelconque des revendications précédentes, **caractérisé en ce que** ladite cloche interne (24) possède une extrémité (29) axiale inférieure pour loger l'aimant (16), cette même forme étant reproduite au niveau de la cloche externe (25) afin d'assurer le contact nécessaire à la reprise d'effort.

## Patentansprüche

1. Mechatronische Fluidregulierungsvorrichtung, welche einen Ventilkörper (10) und einen Sitz (11) umfasst, in den ein beweglicher Stift (12) eingedrückt wird, um die Leitung (1) des zu regulierenden Fluids zu schließen, einen Mehrphasenmotor (2) mit einem Stator (21) und einem Rotor (22), eine translatorisch bewegliche Mittelachse (13), welche die Verschiebung des Stifts (12) steuert, eine Vorrichtung zur Umwandlung der Drehbewegung des Rotors (22) in eine Translationsbewegung der Mittelachse (13), eine innere Dichtungsglocke (24), die mit dem Stator (21) fest verbunden ist, den Rotor (22) in seinem Randbereich umgibt und eine Isolierung zwischen Rotor (22) und Stator (21) bildet, sowie eine Außenglocke (25), welche den Stator (21) umgibt, **dadurch gekennzeichnet, dass** die in Bezug auf den Stator äußere Glocke (25) zumindest teilweise auf einem Ende (29) der Innenglocke (24) aufliegt, sodass das axiale Spiel beseitigt wird, damit die Außenglocke (25) mindestens teilweise axial und radial die auf die Innenglocke (24) angewandten Kräfte des Innendrucks an der Kontaktfläche (27) zwischen der äußeren und der Innenglocke aufnimmt, **dadurch gekennzeichnet, dass** sie einen Magneten (16) enthält, der fest mit der Mittelachse (13) verbunden ist, und dadurch, dass in ihr eine elektronische Karte (14) mit einem magnetempfindlichen Element (15) eingebaut ist, welches in der Lage ist, die absolute Position der Mittelachse (13) durch das Verschieben des Magneten (16) zu erkennen.

2. Mechatronische Fluidregulierungsvorrichtung nach Anspruch 1, **dadurch gekennzeichnet, dass** die Außenglocke (25) aus einem metallischen Material oder aus Kunststoff hergestellt wird

3. Mechatronische Fluidregulierungsvorrichtung nach Anspruch 1, **dadurch gekennzeichnet, dass** der Stator (21) des Mehrphasenmotors aus Pressblechen zusammengesetzt wird, welche Zähne formen und einen Innendurchmesser bilden, der unmittelbar mit der Innenglocke (24) in Kontakt ist.

4. Mechatronische Fluidregulierungsvorrichtung nach Anspruch 1, **dadurch gekennzeichnet, dass** sich der Stator (21) des Mehrphasenmotors aus einer Reihe paralleler Bleche zusammensetzt, die parallel zur Motorachse (13) gestapelt sind und Zähne formen, deren Innendurchmesser unmittelbar mit der Innenglocke (24) in Kontakt ist.

5. Mechatronische Vorrichtung nach Anspruch 1, **dadurch gekennzeichnet, dass** der Magnet (16) um die Achse (13) herum ein achsensymmetrisches Magnetisierungsmotiv aufweist.

6. Mechatronische Vorrichtung nach Anspruch 1, **dadurch gekennzeichnet, dass** das magnetempfindliche Element (15) in der Verschiebungsachse des beweglichen Stifts gegenüber dem Magneten (16) positioniert ist.

7. Mechatronische Fluidregulierungsvorrichtung nach einem der Ansprüche 6 oder 7, **dadurch gekennzeichnet, dass** die Außenglocke (25) eine Öffnung aufweist, die das Positionieren des magnetempfindlichen Elements (15), welches das vom Magneten (16) emittierte Magnetfeld erkennen kann, möglichst nah an die Innenglocke ermöglicht.

8. Mechatronische Fluidregulierungsvorrichtung nach einem der vorhergehenden Ansprüche, **dadurch gekennzeichnet, dass** eine elektronische Karte (14) eingebaut ist, welche eine Vorrichtung (17) zur Steuerung des Mehrphasenmotors (2) umfasst.

9. Mechatronische Vorrichtung nach einem der Ansprüche 1 bis 9, **dadurch gekennzeichnet, dass** die Bewegungswandeleinrichtung mindestens eine mit dem Rotor (22) des Motors verbundene Mutter (23) und mindestens einen mit der Mittelachse (13) verbundenen Gewindeabschnitt (18) aufweist.

10. Mechatronische Vorrichtung nach Anspruch 10, **dadurch gekennzeichnet, dass** die Bewegungswandeleinrichtung eine mit dem Rotor (22) verbundene Mutter (23) und eine zweite, mit der Innenglocke (24) verbundene Mutter (20) aufweist, wobei jede Mutter mit zwei Abschnitten (18) und (19) der Mittelachse (13) zusammenwirkt und die Muttern gegenläufige Gewinde aufweisen.

11. Mechatronische Fluidregulierungsvorrichtung nach einem der vorhergehenden Ansprüche, **dadurch gekennzeichnet, dass** besagte Innenglocke (24) ein unteres axiales Ende (29) zur Aufnahme des Magneten (16) aufweist, wobei diese Form auch an der Außenglocke (25) zu finden ist, um den zur Kraftübernahme erforderlichen Kontakt zu gewährleisten.

## Claims

1. A mechatronics assembly for fluid control comprising a valve body (10), a seat (11) on which a movable needle (12) rests in order to close the fluid pipe (1) to be controlled, a polyphase motor (2) comprising a stator (21) and a rotor (22), a translatably movable central shaft (13) controlling the movement of the needle (12), a device for converting the rotation of the rotor (22) into translation of the central shaft (13), an inner sealing housing (24) rigidly connected to the stator (21) and surrounding the rotor (22) on the periphery thereof and isolating the rotor (22) from the stator (21), an outer housing (25) surrounding the stator (21), **characterized in that** the outer housing (25) surrounding the stator rests at least partially on one end (29) of the inner sealing housing (24) so as to cancel the axial clearance so that the outer housing (25) at least partially absorbs, radially and axially, the inner pressure loads applied to said inner housing (24), at a contact surface (27) between the inner and outer housings, **in that** it comprises a magnet (16) connected to the central shaft (13) and **in that** it is provided with an integrated circuit card (14) carrying a magneto-sensitive element (15) adapted to detect the absolute position of the central shaft (13) through the movement of the magnet (16).

2. A mechatronics assembly for fluid control according to claim 1, **characterized in that** the outer housing (25) is made of a metallic material or a plastic material.

3. A mechatronics assembly for fluid control according to claim 1, **characterized in that** the stator (21) of the polyphase motor consists of stamped sheet metal forming teeth which form an inner diameter in direct contact with the inner housing (24).

4. A mechatronics assembly for fluid control according to claim 1, **characterized in that** the stator (21) of the polyphase motor consists of a set of parallel plates stacked parallel to the motor shaft (13) and forming teeth the internal diameter of which is in direct contact with the inner housing (24).

5. A mechatronics assembly according to claim 1, **characterized in that** the magnet (16) has an axisymmetric magnetization pattern about the shaft (13).

6. A mechatronics assembly according to claim 1, **characterized in that** the magneto-sensitive element (15) is positioned along the axis of movement of the movable needle, opposite the magnet (16).

7. A mechatronics assembly for fluid control according to one of claims 6 or 7, **characterized in that** the outer housing (25) has an opening for placing the magneto-sensitive element (15) adapted to detect the magnetic field emitted by the magnet (16) as close as possible to the internal housing (24).

8. A mechatronics assembly for fluid control according to any one of the preceding claims, **characterized in that** it is provided with an integrated circuit card (14) comprising a device (17) for controlling the polyphase motor (2).

9. A mechatronics assembly for fluid control according to one of claims 1 to 9, **characterized in that** the movement transformation device has at least one nut (23) connected to the rotor (22) of the motor and at least one threaded portion (18) connected to the central shaft (13) .

10. A mechatronics assembly according to claim 10, **characterized in that** the movement transformation device has a nut (23) connected to the rotor (22) and a second nut (20) connected to the inner housing (24), with each nut cooperating with two portions (18) and (19) of the central shaft (13) and having threads in opposite directions.

11. A mechatronics assembly for fluid control according to any one of the preceding claims, **characterized in that** said inner housing (24) has one lower axial end (29) for accommodating the magnet (16), with the same form being reproduced in the outer housing (25) to ensure the contact required for absorbing pressure loads.
